# EUROPEAN PATENT APPLICATION

(11) **EP 0 937 764 A1**
(43) Date of publication of application: **25.08.1999**
(21) Application number: 99100058.9
(22) Date of filing: 05.01.1999
(51) Int. Cl.: C09K 3/14, C04B 35/10, B24D 3/00

(54) **Sol gel abrasive containing reduced titania and process for its preparation**

(30) Priority: 24.02.1998 US 28608
(71) Applicant: WASHINGTON MILLS ELECTRO MINERALS CORPORATION, Niagara Falls, NY 14302 (US)
(72) Inventor: Seider, Robert J., Ransomville, NY 14131 (US); Geise, Matthew R., Newfane, NY 14108 (US)
(74) Representative: Weber, Dieter, Dr.

(57) **Abstract**

A method for forming a sol gel abrasive which comprises forming a gelled dispersion wherein the solids content in the dispersion comprises from 92 to 99 weight percent alumina or alumina precursor and 1 to 8 weight percent of a titanium oxide or titanium oxide precursor. The gelled dispersion is dried to form a dried gel and is heated to a temperature of from about 1225°C to about 1500°C. The heating is done in a gas atmosphere in a reducing environment to create a reduced titanium oxide in the finished abrasive product. The temperature range for a ten minute heating time may be determined by the formula °C = 1425 ±75-20Tc where Tc is concentration of titanium oxide in weight percent solids. The product of the invention is a sol gel abrasive containing a reduced titanium oxide. The invention also includes the novel sol gel grain made by the method of the invention.

## Description

### Background of the Invention

This invention relates to abrasive grain and more particularly relates to abrasive grain made by a sol gel process.

Alumina products made by a sol gel process have been known since at least 1960 when the application for U.S. Patent 3,106,888 was filed. Ceramic particles primarily comprising alumina were described as being made from a sol gel process in U.S. Patent 4,181,532. A non-fused aluminum oxide based abrasive material was described in U.S. Patent 4,314,827 which expires February 9, 1999. This material is described as being made from a sol gel process employing an alumina spinel and a precursor for at least one of zirconia or hafnia. Sol gel abrasive materials have been found to have certain advantages over abrasive grains formed by fusion or sintering of powders. In particular sol gel products can have smaller crystal size, low porosity and better cut and wear characteristics as compared with traditional fused and sintered abrasive products.

Unfortunately there have been problems associated with the preparation of sol gel abrasive grains. In order to obtain a consistently good product, drying and sintering conditions have had to be precisely controlled and expensive grain modifiers have frequently been required, such as zirconia, hafnia, thoria, beryllia, yttria, and cobalt, nickel and zinc compounds and rare earth compounds such as ceria, samaria, neodenium and lanthanum oxide.

Sol gel abrasives consisting of alumina and titania have been described in the literature at the application date of this document, see e.g. U.S. Patent 5,114,891. The titania is not reduced.

### Brief Description of the Drawings

Figure 1 is a graph of cuts of sol gel abrasives of air fired samples from examples described herein versus firing temperature.
Figure 2 is a graph of cuts of sol gel abrasives of graphite fired samples from examples described herein versus firing temperature.

### Brief Description of the Invention

In accordance with the invention a method is provided which permits the manufacture of sol gel abrasive grains comparable to the best available alumina containing sol gel grains in the prior art, without the requirement of adding expensive modifiers, with more latitude in process control, and without the requirement of tightly controlling reaction conditions and environment in order to obtain nitride content.

The invention also includes the novel sol gel grain made by the method of the invention.

Reduced titania in fused grains has been found to be beneficial, see e.g. U.S. Patent 5,143,522; however, no sol gel grain has been known which contains any significant amount of reduced titania nor has there been any suggestion of how such a grain might be obtained in view of stringent sol gel processing requirements. The novel sol gel grain is the first sol gel grain containing any significant amount of reduced titania. Simple addition of reduced titania to sols prior to sintering does not result in a sol gel abrasive grain containing a reduced titania component. The presence of oxygen during sintering simply reoxidizes reduced titanium to titanium dioxide. The use of a nitrogen atmosphere causes a reaction between nitrogen and titanium to form titanium nitride, see e.g. European Patent Application EP 0 471 389.

In particular the novel method of the invention comprises forming a gelled dispersion wherein the solids in the dispersion comprise from 64 to 99 weight percent alumina or alumina precursor, 0 to 35 weight percent zirconia or zirconia precursor and 1 to 8 weight percent of a titanium oxide or titanium oxide precursor. The gelled dispersion is dried to form a dried gel and is heated to a temperature of from about 1225°C to about 1500°C. The heating is done in a gas atmosphere in a reducing environment to create a reduced titanium oxide in the finished abrasive product. The reducing environment may be formed by using a reducing gas such as carbon monoxide or by mixing the feed with graphite flour. The temperature range for a ten minute heating time may be determined by the formula °C = 1425 ±75-20Tc where Tc is concentration of titanium oxide in weight percent solids. The product of the invention is a sol gel abrasive containing a reduced titanium oxide.

### Detailed Description of the Invention

Sol gel abrasives as used herein means abrasives formed from gelled dispersions which are dried and calcined. The dispersions are dispersions which primarily contain hard substances or precursors of hard substances suitable for abrasive applications, especially alumina ( α aluminum oxide). Another suitable hard substance is zirconia. In accordance with the present invention titanium oxide or titanium oxide precursor is included in the sol gel to subsequently obtain a reduced titanium oxide in the finished product to obtain improved properties with broader permissible processing parameters.

The dispersions are stable dispersions in the literal sense i.e. solids in the dispersion do not readily settle. Such dispersions are intended to include both colloidal dispersions and true solutions and mixtures thereof. In the present invention, such dispersions may include colloids of alumina, zirconia and various titanium oxides, e.g. titanium dioxide, titanium monoxide, titanium sesquioxide and mixtures thereof, and substances which will convert to such materials during processing of the sol gel. The colloidal materials are prepared by acidification of water insoluble agglomerated crystalline materials which usually have an average particle size ( 50% ) of less than 200 and preferably less than about 150 microns and desirably less that 25 microns. Such materials may be made by chemical precipitation or by crushing and grinding larger size material, e.g. bauxite. Suitable precursors include organic and inorganic compounds of metals which will convert to the desired hard material or a desired additive during processing. Examples of such precursor compounds include aluminum oxide hydrates, aluminum chloride, aluminum nitrate, zirconium chloride, titanium alkoxides such as titanium IV isopropoxide titanium butoxide and titanium ethoxide; titanium chloride lanthanum nitrate and magnesium nitrate.

The dispersions used in the invention contain alumina and reduced titania precursors in an amount which results in from about 64 to 99 weight percent alumina, 0 to 35 weight percent zirconia and about 1 to 8 weight percent reduced titania in the finished product. Unless otherwise indicated, weight percent of alumina and titanium oxide colloids and precursors is stated in weight percent solids calculated exclusive of any solid reducing agent. In a preferred dispersion, alumina precursor is provided in an amount of from about 5 to about 40 percent of combined alumina precursor and colloidal alumina and from about 1 to less than about 2 percent by weight of solids of combined titanium oxide and titanium oxide precursor.

In order to form the gelled dispersion ( sol gel ), the colloidal size materials and precursors are dispersed in from 60 to 90 percent by weight of dispersion, of a suitable liquid medium which primarily comprises water. Such dispersion may be made using a high shear mixer. The components may all be mixed simultaneously or components may be independently dispersed and the resulting independent dispersions subsequently mixed with other components.

A gelling additive is included in the dispersion either at the time of initial dispersion or later. The gelling additive is usually a mineral acid which reacts with aluminum hydrate in the dispersion to form a gel. An especially suitable mineral acid In nitric acid. Such acid is usually used in a quantity of about 0.08 to 0.1 mole of acid per mole of alumina.

Reducing agent may be included in the sol gel or may surround the sol gel to provide a reducing environment during sintering ( heating to 1225°C to 1500°C ). Such reducing agents include colloidal carbon, usually in the form of graphite and water soluble organic carbon, e.g. isopropanol, n-butanol and various water soluble sugars. Other reducing agents include readily oxidizable colloidal metals whose oxides are compatible with the abrasive composition, e.g. aluminum. The quantity of reducing agent used is often sufficient to react with 40 to 125 percent oxygen by weight of solids in the sol gel, , e.g. 20 to 50 weight percent carbon. A reducing atmosphere may be used alone or in conjunction with reducing agent in or around the sol gel. Suitable reducing atmospheres are carbon monoxide and hydrogen.

Other additives may be included in the sol gel for various purposes. e.g. grain growth and grain boundary modifiers, densification agents, dispersing agents and solvents, e.g. lanthanum oxide, iron oxides, surfactant and isopropanol.

After the gel is formed, it is dried and crushed. The drying may be done by any suitable means such as film evaporation and crushing may also be done by known methods, e.g. roll crushing.

After crushing the dried sol gel is calcined at 500 - 600°C and then sintered at a temperature of from about 1225°C to about 1500°C for a time of about 2 seconds to about 60 minutes. The best temperature in Celsius has been empirically determined to usually be about 1425 ± 75 - 20Tc where Tc is the concentration of titania in weight percent solids excluding carbonaceous materials ( e.g. free reactive metals, carbon and organic compounds such as aluminum, graphite, alcohols and sugars ). The time is somewhat dependent upon the size of the batch of material being heated, since longer times are required to heat larger quantities of materials to the desired temperature. In general small batches and short heating times are preferred since a more uniform product having an average smaller crystal size results. Heating may be done in crucibles in a standard furnace; however, a tube furnace is preferable since quicker heat transfer results thus making shorter heating times possible. In an ideal situation single grains of crushed material pass through a tube furnace in a matter of seconds.

After heating, the grain may be rapidly cooled, e.g. to below 900°C in less than ten seconds. Even shorter cooling times may be used.

The titanium in the finished product is combined with oxygen at an average titanium valence of less than +3.5 which results in a desirable and superior product.

The following specific examples serve to illustrate and not limit the invention.

### Examples 1-52

An Al₂O₃ - TiO₂ system was produced from boehmite (aluminum oxide hydrate) under the trademark DISPERAL owned by Condea Chemie GMBH of the Federal Republic of Germany.

The following formulation was used:
97 grams of Al₂O₃ from 130.2 grams of DISPERAL boehmite (97 ÷ .745 to account for chemical water)
3 grams of TiO₂ from 10.7 grams of titanium IV isopropoxide, and
12.0 ml of concentrated HNO₃ (0.1 moles HNO₃ per mole of boehmite).

With a mixer on 130.2 grams of boehmite was added into 400ml of water. 5 ml of concentrated nitric acid was diluted in 30 ml of water and added to the boehmite slurry. The acid dispersed the boehmite to a colloidal size to form a sol. 10.7 grams of Ti IV isopropoxide was added to 450 grams of isopropyl alcohol and then added to a mixture of 30 ml of water and 4 ml of concentrated nitric acid. The resulting mixture was then added to the sol. The balance of the acid ( 3 ml )was added to 40 ml of water and then added to the sol which then forms a gel.

The gel is spread onto a plastic sheet and allowed to air dry. The air dried gel is then oven dried to 100°C and crushed and screened. The material was then calcined at 550°C for 45 minutes and was ready for firing.

The procedure was repeated for various concentrations of titanium isopropoxide to provide calculated titania concentrations of 0 (with .06 and .14 moles of acid), 0.5, 1.0, 2.0, 3.0, 4.0, 5.0, and 8.0 percent. As the amount of titanium isopropoxide was increased, the amount of acid added to the titanium isopropoxide was increased accordingly. 100 gram samples in four 25 gram increments of the compositions were fired for ten minutes at various temperatures of from 1200 to 1525°C both unprotected in air and protected by mixing with graphite and covered by a layer of graphite to form a reducing environment..

Each of the samples of fired material was graded to 36 grit and coated using standard procedures onto an 8 inch by 8 inch fiber backing material using phenolic resin, calcium carbonate and cryolite. For purposes of comparison a commercial alumina sol gel grain which incorporates about one percent each of magnesium oxide, yttrium oxide, lanthanum oxide and neodymium oxide was also coated onto a backing using the same procedures. The cured eight inch square coated products were cut into seven inch diameter discs and tested by grinding on 1018 steel samples having a one inch by twelve inch cross section. Tables 1 and 2 show the results in grams of material removed during the life of the disc.

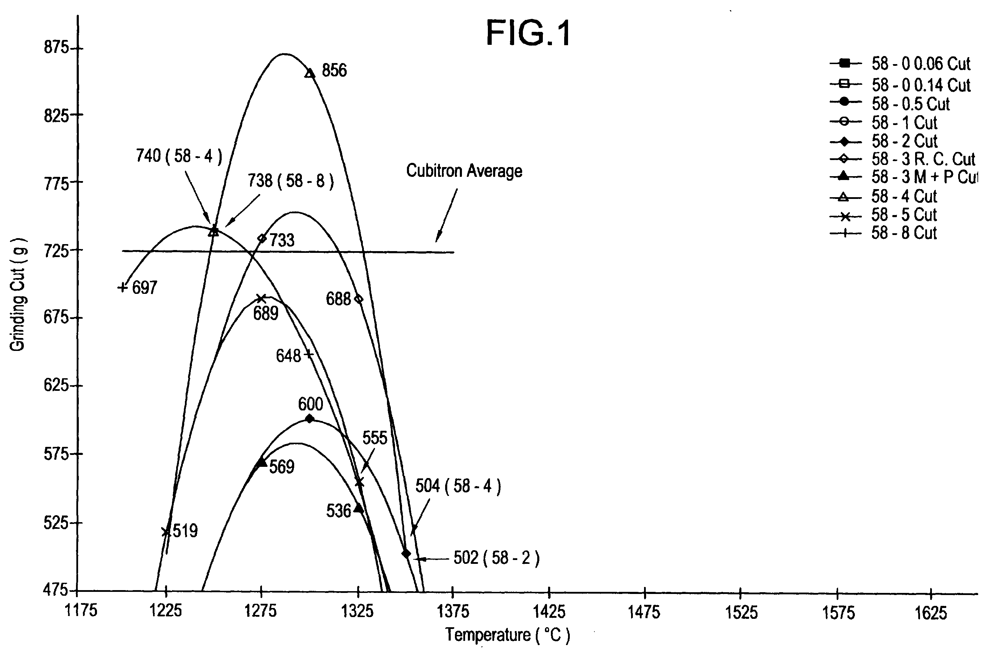

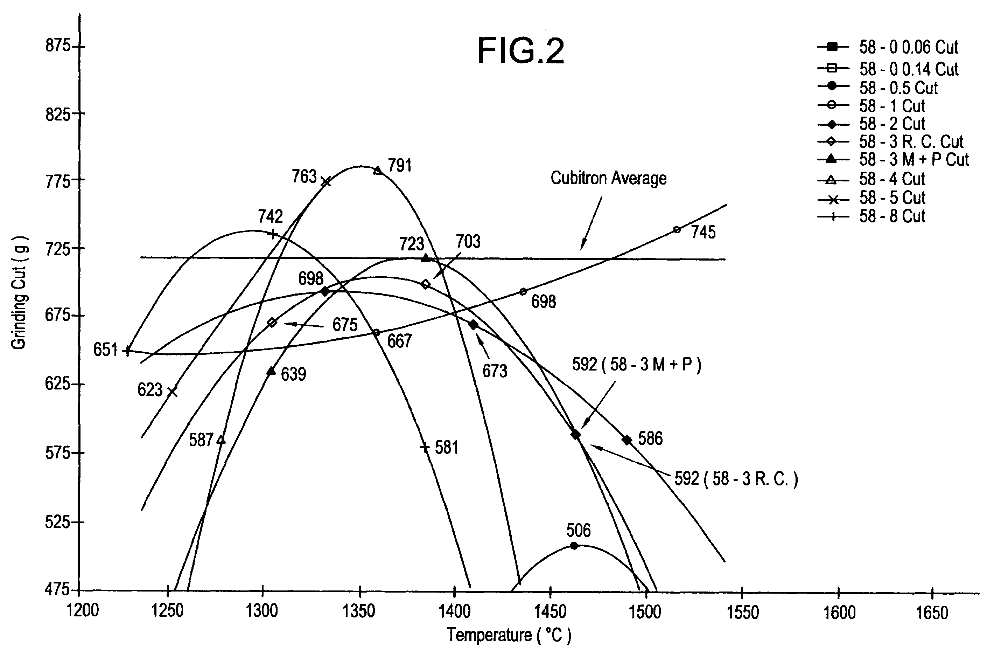

As can be seen from Tables 1 and 2 and the graphs developed therefrom shown in Figures 1 and 2, the products of the invention incorporating as little as one percent reduced titania have cuts comparable to those using at least 3% titania in air and also to commercial sol gels which include costly rare earth components. Furthermore it is clear from the graphs that the products made in a reducing atmosphere are more tolerant of processing conditions.

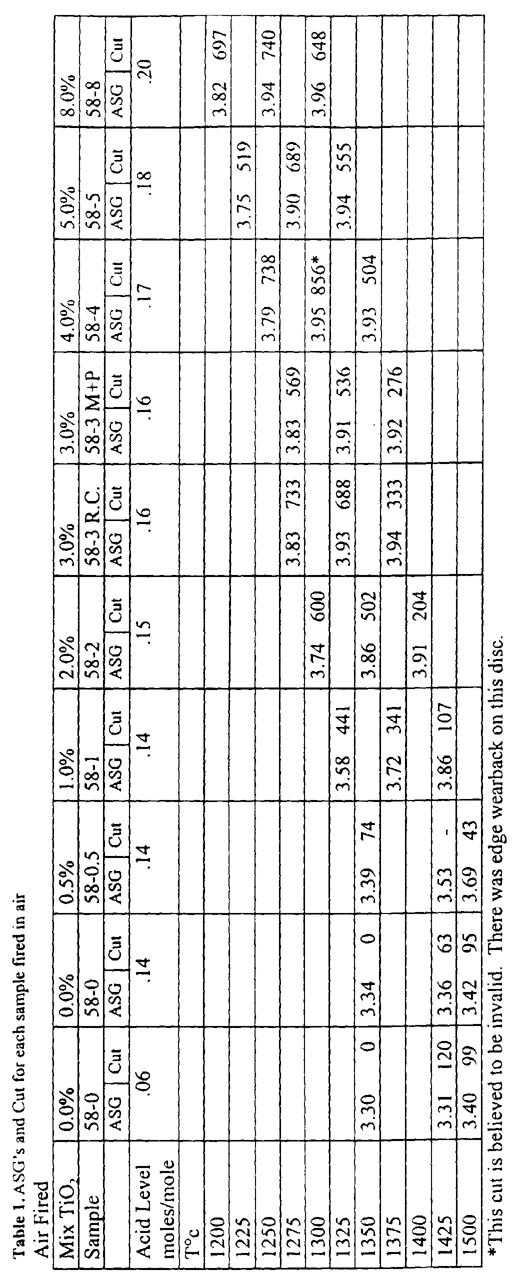

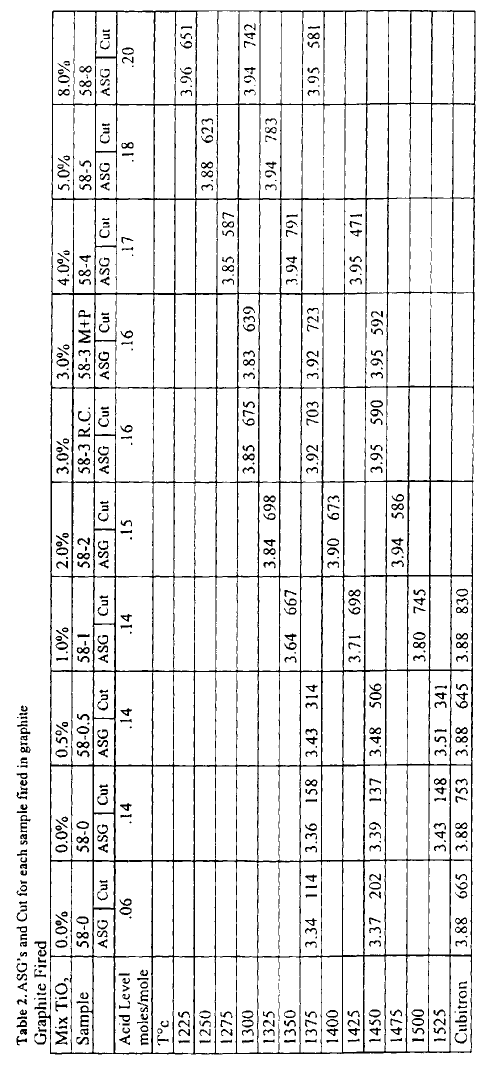

## Claims

1. A method for making a sol gel abrasive composition comprising:
forming a gelled aqueous dispersion wherein the solids in the dispersion. excluding carbonaceous material, comprise from 64 to 99 weight percent alumina or alumina precursor 0 to 35 weight percent zirconia or zirconia precursor, and 1 to 8 weight percent of a titanium oxide or a titanium oxide precursor;
drying said dispersion to form a dried gel;
heating the dried gel at a temperature of from about 1225°C to about 1500°C for a time of about 2 seconds to about 60 minutes, said temperature for a ten minute heating time being determined by the formula °C = 1425 ± 75 - 20Tc, where Tc is the concentration of titania in weight percent excluding carbonaceous materials, characterized in that said heating occurring in a gaseous atmosphere in a reducing environment, to form a sol gel abrasive composition containing titanium combined with oxygen at an average titanium valence of less than +3.5.

2. The method of claim 1 characterized in that the dried gel is heated to the temperature for less than about one minute.

3. The method of claim 1 characterized in that the reducing environment comprises an atmosphere containing carbon monoxide.

4. The method of claim 1 characterized in that the reducing environment is obtained by including a reducing agent in the sol gel.

5. The method of claim 4 characterized in that the reducing agent is selected from the group consisting of colloidal carbon, oxidizable organic compounds, and aluminum.

6. The method of claim 5 characterized in that the reducing agent is from about 20 to 50 percent of solids and is graphite flour.

7. The method of claim 1 characterized in that alumina precursor is provided in the form of colloidal aluminum hydrate in an amount of from about 5 to about 40 weight percent of combined alumina precursor and colloidal aluminum hydrate.

8. The method of claim 1 characterized in that titania precursor is used in the form of titanium IV isopropoxide.

9. The method of claim 1 characterized in that less than 2 percent by weight of solids, excluding reducing agent, of combined titanium oxide and titanium oxide precursor is used.

10. A sol gel abrasive characterized in that it is manufactured in accordance with the method of claim 1, said sol gel abrasive comprising from 64 to 99 weight percent alumina, 0 to 35 weight percent zirconia and 1 to 8 weight percent of reduced titanium oxide at an average titanium valence of less than +3.5., said sol gel abrasive being essentially free of titanium nitride.

11. A sol gel abrasive characterized in that it is manufactured in accordance with the method of claim 2, said sol gel abrasive comprising from 92 to 99 weight percent alumina and 1 to 8 weight percent of reduced titanium oxide at an average titanium valence of less than +3.5., said sol gel abrasive being essentially free of titanium nitride.

12. A sol gel abrasive characterized in that it is manufactured in accordance with the method of claim 3, said sol gel abrasive comprising from 92 to 99 weight percent alumina and 1 to 8 weight percent of reduced titanium oxide at an average titanium valence of less than +3.5., said sol gel abrasive being essentially free of titanium nitride.

13. A sol gel abrasive characterized in that it is manufactured in accordance with the method of claim 4, said sol gel abrasive comprising from 92 to 99 weight percent alumina and 1 to 8 weight percent of reduced titanium oxide at an average titanium valence of less than +3.5., said sol gel abrasive being essentially free of titanium nitride.

14. A sol gel abrasive characterized in that it is manufactured in accordance with the method of claim 5, said sol gel abrasive comprising from 92 to 99 weight percent alumina and 1 to 8 weight percent of reduced titanium oxide at an average titanium valence of less than +3.5., said sol gel abrasive being essentially free of titanium nitride.

15. A sol gel abrasive characterized in that it is manufactured in accordance with the method of claim 6, said sol gel abrasive comprising from 92 to 99 weight percent alumina and 1 to 8 weight percent of reduced titanium oxide at an average titanium valence of less than +3.5., said sol gel abrasive being essentially free of titanium nitride.

16. A sol gel abrasive characterized in that it is manufactured in accordance with the method of claim 7, said sol gel abrasive comprising from 92 to 99 weight percent alumina and 1 to 8 weight percent of reduced titanium oxide at an average titanium valence of less than +3.5., said sol gel abrasive being essentially free of titanium nitride.

17. A sol gel abrasive characterized in that it is manufactured in accordance with the method of claim 8, said sol gel abrasive comprising from 92 to 99 weight percent alumina and 1 to 8 weight percent of reduced titanium oxide at an average titanium valence of less than +3.5., said sol gel abrasive being essentially free of titanium nitride.

18. A sol gel abrasive characterized in that it is manufactured in accordance with the method of claim 9, said sol gel abrasive comprising from 92 to 99 weight percent alumina and 1 to 8 weight percent of reduced titanium oxide at an average titanium valence of less than +3.5., said sol gel abrasive being essentially free of titanium nitride.
